# FASCICULE DE BREVET EUROPEEN

(11) **EP 2 822 976 B1**
(45) Date de publication et mention de la délivrance du brevet: **19.10.2016**
(21) Numéro de dépôt: 13710988.0
(22) Date de dépôt: 11.03.2013
(51) Int. Cl.: C08F 2/10, C08F 2/38

(54) **POLYMÉRISATION RADICALAIRE CONTRÔLÉE EN DISPERSION EAU-DANS-L'EAU**
KONTROLLIERTE RADIKALISCHE POLYMERISATION IN EINER WASSER-IN-WASSER-DISPERSION
CONTROLLED RADICAL POLYMERISATION IN WATER-IN-WATER DISPERSION

(30) Priorité: 09.03.2012 FR 1200725
(43) Date de publication de la demande: 14.01.2015
(73) Titulaire: Rhodia Operations, 75009 Paris (FR)
(72) Inventeur: DESTARAC, Mathias, F-31000 Toulouse (FR); WILSON, James, David, F-60580 Coye La Foret (FR); STOILOVA, Silvia, 75012 Paris (FR)
(74) Mandataire: Cordier, Pascal Christian
(86) Numéro de dépôt international: PCT/EP2013/054905
(87) Numéro de publication internationale: WO 2013/132108

(56) Documents cités:
- WO-A1-2009/153162
- WO-A2-2008/000766
- WO-A2-2011/110841
- FR-A1- 2 917 415

## Description

La présente invention a trait à une méthode de préparation de polymères hydrosolubles, donnant accès à ces polymères sous la forme de dispersions aqueuses concentrées. La présente invention donne accès à des dispersions aqueuses de ce type qui ont un taux de matière sèche élevé, mais qui sont néanmoins fluides et stables et donc aisément transportables, manipulables et stockables. L'invention concerne également des applications des dispersions ainsi réalisées, qui peuvent notamment être aisément diluées en milieu aqueux pour libérer les polymères en solution, par exemple pour modifier les propriétés rhéologiques d'un milieu aqueux.

Lorsqu'il est fait référence dans la présente description à un milieu dit « aqueux », il s'agit d'un milieu comprenant de l'eau, éventuellement en mélange à d'autres solvants hydrosolubles (comme de l'éthanol ou d'autres alcools, par exemple, ou bien encore la glycérine), et dans lequel peuvent être dissous des sels ou bien d'autres composés hydrosolubles. Dans un milieu dit « aqueux » au sens de la présente description, l'eau est de préférence un composé présent à hauteur d'au moins 30% en masse, plus préférentiellement d'au moins 50% en masse. Lorsque des solvants hydrosolubles autres que l'eau sont employés, il est préférable que le rapport de la masse de l'eau présent dans le milieu aqueux rapportée à la masse totale de l'eau et des autres solvants hydrosolubles présents dans le milieu (rapport massique eau/solvants) soit supérieur à 50%, voire à 60%.

Une « dispersion aqueuse d'un polymère » désigne, au sens de la présente description, une composition comprenant un polymère sous la forme de particules observables par microscopie de dimensions comprises entre 100 nm et 20 microns (le plus souvent entre 500 nm et 15 microns, et typiquement entre 1 et 10 microns) dispersées au sein d'une phase constituée par un milieu aqueux tel que défini ci-dessus. Une dispersion de polymères, au sens où ce terme est employé dans la présente description, est à distinguer d'une solution de polymères, qui ne contient pas des polymères sous la forme de particules observables par microscopie. Au sens de la présente description, on considère qu'un polymère est solubilisé dans un milieu notamment si le milieu ne contient aucun agrégat de ce polymère sous la forme d'agrégats dépassant 100 nm. Une dispersion aqueuse d'un polymère hydrosoluble se distingue généralement assez aisément, visuellement, d'une solution de polymère : typiquement, la dispersion a un aspect laiteux et diffuse largement la lumière, alors qu'une solution a le plus souvent un aspect transparent.

Au sens de la présente description, le terme « polymère hydrosoluble » désigne un polymère qui peut être mis en solution dans de l'eau, au moins dans certaines conditions de pH et de salinité, à une concentration de plus de 0,1 g/L, voire de plus de 0,5 g/L, sans apparition d'agrégats/particules de dimensions supérieures à 100 nm, et typiquement sans aucune apparition d'agrégat ou particule. De tels polymères sont bien connus de l'homme du métier et, à titre de polymères hydrosolubles de ce type, on peut notamment citer, à titre illustratif, les homo- et copolymère obtenus par polymérisation de monomère de type acrylamido, de N-vinyl pyrrolidone (NVP) et/ou d'acide acrylique.

Il est bien connu que la synthèse des polymères hydrosolubles est délicate à réaliser directement en milieu aqueux : la polymérisation des monomères hydrosolubles induit en effet une élévation de la viscosité du milieu de polymérisation, et, pour éviter un effet de prise en masse du milieu (ou tout au moins pour permettre la récupération du polymère obtenu), il est nécessaire de limiter la masse moléculaire et/ou la concentration du polymère synthétisé. La polymérisation en solution ne permet d'atteindre des masses dépassant 1 000 000 à 2 000 000 g/Mol, qu'avec des extraits sec faibles (1 à 15% au maximum).

Des solutions alternatives, comme la polymérisation en gel, ont certes été décrites, qui conduisent à des polymères sous forme plus concentrée, mais qui sont difficiles à redisperser efficacement dans des milieux aqueux. En outre, la polymérisation en gel conduit systématiquement à des polymères de haute masse (typiquement supérieures à 5 000 000 g/mol).

Pour obtenir des polymères hydrosolubles de haute masse (supérieures à 500 000 g/mol), il est bien connu de mettre en oeuvre une polymérisation en émulsion inverse, à savoir en réalisant la polymérisation au sein de gouttelettes dispersées au sein d'un milieu continu hydrophobe. Les polymérisations de ce type (dites « polymérisations en émulsion inverse ») conduisent certes à des polymères de relativement haute masse, notamment dans la gamme de 500 000 à 10 000 000 g/mol, mais, pour les employer ultérieurement en milieu aqueux, il est nécessaire de les séparer de la phase hydrophobe, ce qui se traduit par un surcoût. Par ailleurs, les polymères obtenus comprennent des tensioactifs utilisés pour leur synthèse qui peuvent nuire à certaines applications ultérieures, sauf à les extraire, ce qui implique des coûts supplémentaires.

Des variantes ont été proposées par le passé pour essayer de pallier ces difficultés, et tenter d'obtenir des dispersions de polymères hydrosolubles directement dans un milieu aqueux, par exemple en synthétisant des polymères à caractère ionique dans un milieu aqueux comprenant des sels, le polymère précipitant lorsqu'il atteint une masse moléculaire suffisamment élevée. Dans ce type de procédé, parfois désigné par «polymérisation en dispersion eau-dans-l'eau » ou encore « homogeneous dispersion polymerization » en anglais, schématiquement, la polymérisation commence comme dans une polymérisation en solution de type usuel, mais finit comme dans la polymérisation en milieu dispersé. A titre d'exemple de procédés de ce type, on peut par exemple citer les méthodes proposées dans US 3,658,772, US 3, 493,500 ou bien dans FR 2 879 606 ou bien encore dans American Chemical Society Symposium Series, vol 755, Chapter 4, 36-45. Les dispersions aqueuses de polymères hydrosolubles qui sont obtenues par polymérisation en dispersion eau-dans-l'eau sont certes intéressantes (notamment de par leur coût relativement faible et par l'accès à des dispersions directement utilisables en milieu aqueux), mais elles sont limitées à des polymères spécifiques et elles présentent en outre deux inconvénients majeurs, à savoir :
- une viscosité élevée :
   bien que similaire, dans l'esprit, à une polymérisation en phase inverse, la polymérisation en dispersion eau-dans-l'eau conduit à des polymères dont une partie reste en solution et qui induit donc une augmentation de la viscosité du milieu, de façon similaire à la polymérisation en solution. Ainsi, même si elle est atténuée, la problématique rencontrée en polymérisation en solution est toujours présente, ce qui impose des limitations similaires en termes de taille de polymère et de concentration.
- une stabilité relative :
   les particules de polymères ont tendance à coalescer, pendant la polymérisation et ultérieurement, ce qui peut induire des phénomènes de prise en masse lors de la polymérisation et/ou à des phénomènes de sédimentation lors du transport ou du stockage des dispersions, ce qui, là encore, implique des limitations en termes de taille de polymère et/ou de concentration.

Compte tenu de ces inconvénients, la teneur en polymère dans les dispersions obtenues dépasse rarement 20% en masse.

En outre, ce type de polymérisation (la polymérisation en dispersion eau dans l'eau) présente un mauvais contrôle sur la structure des chaînes polymères formées, typiquement un mauvais contrôle de la masse moléculaire des chaînes formées, ce qui peut conduire à une polydispersité très importante.

Un but de la présente invention est de fournir une méthode permettant d'obtenir des polymères hydrosolubles sous la forme d'une dispersion en milieu aqueux s'affranchissant des difficultés précitées.

A cet effet, il est proposé selon la présente invention de mettre en oeuvre une polymérisation du type de la polymérisation en dispersion eau-dans-l'eau précitée, mais en employant en outre un stabilisant réactif, qui assure une stabilisation accrue par rapport à celle obtenue avec les procédés précités, autorisant notamment des taux de matière sèche plus élevés.

Plus précisément, la présente invention a pour objet un procédé de préparation d'une dispersion aqueuse de polymères hydrosolubles, qui comprend une étape (E) de polymérisation radicalaire, dans laquelle on met en contact, au sein d'un milieu aqueux (M) dans lequel le polymère synthétisé n'est pas soluble :
- au moins un monomère éthyléniquement insaturé qui est soluble dans le milieu aqueux (M)
- au moins une source de radicaux libres ; et
- un stabilisant réactif qui comprend :
   - une chaîne polymère (CP) soluble dans le milieu (M)
   - un groupe (G) assurant un caractère vivant et contrôlé à la polymérisation radicalaire de l'étape (E), tel que, par exemple, un groupe porteur d'un groupe thiocarbonylthio -S(C=S)-

Le stabilisant réactif qui est employé dans l'étape (E) est un composé particulier, qui est engagé dans le processus de polymérisation (E), selon un mécanisme bien connu en soi, dit de polymérisation radicalaire contrôlée dite « vivante », par exemple décrit dans les demandes de brevet WO 98/58974, WO 00/75207 et WO 01/42312. Schématiquement, selon ce mécanisme, la polymérisation de l'étape (E) conduit à la formation d'une chaîne polymère par intercalation progressive des unités monomères entre la chaîne polymère initialement présent sur le composé réactif et le groupe assurant le caractère vivant. La polymérisation est dite « vivante » dans la mesure où le polymère en formation reste en permanence disponible pour l'incorporation de nouvelles unités monomères entre la chaîne polymère en formation et le groupe assurant le caractère vivant et contrôlé. Par ailleurs, la polymérisation est dite contrôlée, car la taille des chaînes en croissance peut être finement régulée, typiquement en fonction du rapport du nombre de monomères au nombre de groupe assurant un caractère vivant et contrôlé disponibles dans le milieu (la masse moléculaire obtenue est d'aurant plus élevée que ce rapport est élevé). Il est à noter à ce sujet que, par rapport aux méthodes décrites par le passé, la méthode de la présente invention permet d'obtenir un contrôle très fin de la structure des chaînes polymères formées, avec notamment un contrôle très précis de la masse moléculaires des chaînes formées et un indice de polydispersité très faible, ce qui constitue un autre avantage spécifique de la présente invention. Ce contrôle autorise notamment de balayer une très large gamme de taille pour les polymères synthétisés, avec des masses moléculaires pouvant aller de 500 000 à 20 000 000 g/mol, par exemple entre 1 000 000 et 15 000 000 g/mol et notamment entre 2 000 000 et 10 000 000 g/mol. Plus généralement, les masses moléculaires pour les polymères synthétisés peuvent aller typiquement de 5 000 à quelques millions g/mol, par exemple de 10 000 à 10 000 000 g/mol, notamment de 20 000 à 5 000 000 g/mol.

Le stabilisant réactif employé dans l'étape (E) présente par ailleurs une chaîne polymère (CP) qui est soluble dans le milieu aqueux (M) de l'étape (E). Le stabilisant réactif est typiquement un polymère ou un oligomère vivant obtenu à l'issue d'une étape (E⁰) préalable à l'étape (E), dans laquelle on met en contact :
- au moins un monomère éthyléniquement insaturé soluble dans le milieu aqueux (M)
- au moins une source de radicaux libres ; et
- un agent de contrôle de la polymérisation radicalaire, par exemple un agent porteur d'un groupe thiocarbonylthio -S(C=S)- et typiquement un agent porteur du même groupe (G) que celui souhaité sur le stabilisant réactif de l'étape (E).

La chaîne polymère qui est présente sur le stabilisant réactif est spécifiquement soluble au sein du milieu (M). Compte tenu des conditions spécifiques de mise en oeuvre de l'étape (E), cette chaîne polymère reste en permanence liée de façon covalente à l'extremité des chaînes polymères en croissance dans l'étape (E). La chaîne polymère soluble (CP) présente dès le départ sur le stabilisant réactif de l'étape (E) est en général de nature distincte de la chaîne polymère qui est formée lors de l'étape (E).

Alors que la chaîne polymère qui se forme dans l'étape (E) devient progressivement insoluble dans le milieu (M) suite à l'incorporation d'unités monomères, la chaîne polymère (CP) reste quant à elle en permanence soluble dans le milieu (M). De ce fait, lors de la conduite de l'étape (E), il se forme dans un premier temps des chaînes polymères vivantes solubles dans le milieu (M), puis une précipitation des chaînes sous la forme de particules présentant en périphérie les chaînes polymères stabilisantes (CP), puis la poursuite de la polymérisation au sein des particules ainsi formées, selon un mécanisme proche de celui de la polymérisation en dispersion. Le contrôle très fin de la polymérisation radicalaire opéré selon l'invention permet dans ce cadre un meilleure contrôle de ces étapes, et notamment une meilleure gestion de l'étape de nucléation que celle qu'on obtient par exemple dans les procédés de polymérisation en dispersion eau-dans l'eau du type décrit au début de la présente description.

Comme indiqué plus haut dans la présente description, les polymères synthétisés à l'issu de l'étape (E) sont non solubles dans le milieu (M) où ils se retrouvent dispersés. Néanmoins, ces polymères à base d'unités hydrosolubles sont, intrinsèquement, des polymères hydrosolubles au sens de la présente description, qui peuvent donc être redissous en milieu aqueux, par exemple par simple dilution en milieu aqueux.

Bien que cela ne soit pas absolument requis, l'étape (E) du procédé de l'invention peut, selon un mode de réalisation particulier, être mise avec la présence d'agents stabilisants non réactifs additionnels, par exemple des polymères amphiphiles à bloc où plus généralement comprenant un bloc non compatible avec le milieu (M), et un bloc compatible avec le milieu (M), avantageusement obtenus selon un procédé de polymérisation radicalaire contrôlée, ou bien encore des homo- ou copolymères stabilisants non réactif. Par « stabilisant non réactif », on entend au sens de la présente description un agent stabilisant ne comprenant pas de groupe (G). Selon un autre mode de réalisation de l'invention, on ne met en oeuvre aucun agent stabilisant additionnel non réactif lors de l'étape (E).

Selon un autre aspect, la présente invention a pour objet les dispersions du type obtenues selon le procédé précité, typiquement directement à l'issue de l'étape (E). En plus des avantages décrits plus haut concernant le contrôle des chaînes polymères formées, ces dispersions présentent l'intérêt d'être stables et de faible viscosité, et donc aisément manipulables et transportables, et ce avec des taux de matière sèche qui peuvent être élevés. La présente invention permet notamment d'obtenir des dispersions de polymères où la concentration en polymère peut être supérieure à 10%, notamment supérieure ou égal à 15%, de préférence supérieure à 20%, voire supérieure à 30%, voire supérieure à 35% ou même à 40% dans certains cas, ce qui n'est pas obtenu avec les procédés actuels, à la connaissance des inventeurs. Typiquement, la concentration en polymère reste néanmoins inférieure à 60% en masse, voire à 50% en masse. Des dispersions particulièrement intéressantes qui peuvent être préparées selon l'invention présentent par exemple des teneurs en polymère entre 30 et 50% en masse, par exemple entre 35 et 45% en masse.

Les dispersions aqueuses de polymère obtenues dans le cadre de la présente invention en outre l'avantage de pouvoir être employées en l'état comme additif pour des compositions aqueuses sans étape ultérieure de purification ou d'inversion de phase (contrairement par exemple aux dispersions issues de la polymérisation en émulsion inverse). L'ajout d'une faible quantité d'une dispersion selon l'invention au sein d'une composition aqueuse conduit en règle générale à un effet de dissolution qui induit une solubilisation rapide et directe du polymère dans ladite composition. Cet effet peut avantageusement être employé pour augmenter la viscosité d'une composition aqueuse ou plus généralement pour modifier les propriétés rhéologiques de cette composition aqueuse. Dans ce cadre, le polymère présent dans les dispersions de l'invention assure le rôle d'agent de modification de la rhéologie uniquement dans la composition finale, lorsqu'il est à l'état solubilisé. Il est intéressant de noter qu'il n'assure pas cet effet dans les dispersions de la présente invention, où il est, au contraire présent à l'état dispersé. Les dispersions de l'invention constituent en cela une alternative très intéressante aux solutions aqueuses de polymère obtenues par polymérisation en solution qui sont extrêmement visqueuses et difficile à manipuler.

Les dispersions aqueuses de la présente invention peuvent également jouer un rôle d'agent modificateur de surface.

Différentes caractéristiques et modes de réalisation avantageux de l'invention vont maintenant être décrits plus en détails.

### Le stabilisant réactif

La nature du groupe (G) présent sur le stabilisant réactif et assurant un caractère vivant et contrôlé à la polymérisation de l'étape (E) (groupe également désigné ci-après par « groupe de contrôle ») peut varier en une assez large mesure. Selon un mode de réalisation particulier, le stabilisant réactif employé dans l'étape (E) peut être porteur de plusieurs groupes de ce type, mais il est le plus souvent porteur d'uniquement un groupe (G).

Le groupe de contrôle (G), qui est propre à induire une réaction de polymérisation radicalaire contrôlée des monomères, peut par exemple être :
- un groupe xanthate tel que décrit par exemple dans WO 98/58974
- un groupe dithiocarbamates tel que décrit dans WO 99/31144,
- un groupe dithiocarbazates tel que décrit dans WO 02/26836,
- un groupe dithiophosphoroesters tel que décrit dans WO 02/10223,

De préférence, il s'agit d'un groupe xanthate, dithiocarbamate, ou dithiocarbazate, plus préférentiellement, d'un groupe xanthate.

Plus généralement, l'étape (E) peut être conduite en employant un des procédés suivants :
- le procédé de la demande WO 99/03894 qui met en oeuvre une polymérisation en présence de précurseurs nitroxydes,
- le procédé de la demande WO 96/30421 qui utilise une polymérisation radicalaire par transfert d'atome (ATRP),
- le procédé de polymérisation radicalaire contrôlée par des agents de control de type iniferters selon l'enseignement de Otu et al., Makromol. Chem. Rapid. Commun., 3, 127 (1982),
- le procédé de polymérisation radicalaire contrôlée par transfert dégénératif d'iode selon l'enseignement de Tatemoto et al., Jap. 50, 127, 991 (1975), Daikin Kogyo Co Itd Japan et Matyjaszewski et al., Macromolecules, 28, 2093 (1995),
- le procédé de polymérisation radicalaire contrôlée par les dérivés du tetraphényléthane, divulgué par D. Braun et al. Dans Macromol. Symp. 111,63 (1996), ou encore,
- le procédé de polymérisation radicalaire contrôlée par des complexes organocobalt décrit par Wayland et al. Dans J.Am.Chem.Soc. 116,7973 (1994)
- le procédé de polymérisation radicalaire contrôlée par du diphénylethylène (WO 00/39169 ou WO 00/37507).

Plus généralement, le groupe (G) peut être choisi parmi tous les groupes adapté pour réaliser une polymérisation contrôlée des monomères utilsiés dans l'étape (E), par exemple de type ATRP (atom transfer radical polymerization), NMP (nitroxide-mediated polymerization), ou RAFT ou MADIX

Les groupement de contrôle comprenant un groupe thiocarbonylthio -S(C=S)- , et particulièrement les xanthates, dithioesters, trithiocarbonates, dithiocabamates et dithiocarbazates se révèlent particulièrement intéressants à titre de groupe (G) dans les stabilisants réactifs employés dans l'étape (E).

Selon un mode de réalisation particulièrement intéressant, ce groupe est introduit via l'agent de contrôle employé dans la polymérisation radicalaire contrôlée mise en oeuvre dans l'étape (E⁰) précité, qui est typiquement un agent de contrôle RAFT ou MADIX.

Le groupe (G) présent sur le stabilisant réactif répond typiquement à la formule - S(C=S)-Z où Z est tel que fini ci-dessous, ce groupe étant typiquement obtenu en mettant en oeuvre dans l'étape (E⁰) un agent de contrôle qui répond à la formule (A) ci-dessous : 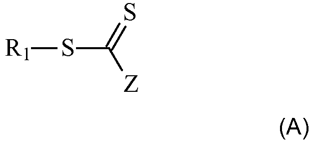 où :
- Z représente :
   - un atome d'hydrogène,
   - un atome de chlore,
   - un radical alkyl éventuellement substitué, aryl éventuellement substitué,
   - un hétérocycle éventuellement substitué,
   - un radical alkylthio éventuellement substitué,
   - un radical arylthio éventuellement substitué,
   - un radical alkoxy éventuellement substitué,
   - un radical aryloxy éventuellement substitué,
   - un radical amino éventuellement substitué,
   - un radical hydrazine éventuellement substitué,
   - un radical alkoxycarbonyl éventuellement substitué,
   - un radical aryloxycarbonyl éventuellement substitué,
   - un radical carboxy, acyloxy éventuellement substitué,
   - un radical aroyloxy éventuellement substitué,
   - un radical carbamoyle éventuellement substitué,
   - un radical cyano,
   - un radical dialkyl- ou diaryl-phosphonato,
   - un radical dialkyl-phosphinato ou diaryl-phosphinato, ou
   - une chaîne polymère
      et
- R₁ représente :
   - un groupe alkyle, acyle, aryle, aralkyle, alcène ou alcyne éventuellement substitué,
   - un cycle carboné ou un hétérocycle, saturé ou non, aromatique éventuellement substitué, ou
   - une chaîne polymère.

Les groupes R₁ ou Z, lorsqu'ils sont substitués, peuvent l'être par des groupes phényles éventuellement substitués, des groupes aromatiques éventuellement substitués, des cycles carbonés saturés ou non, des hétérocycles saturé ou non, ou des groupes : alkoxycarbonyle ou aryloxycarbonyle (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, perfluoroalkyle CₙF₂ₙ₊₁, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Selon un mode de réalisation particulier, R₁ est un groupe alkyle substitué ou non, de préférence substitué.

Les groupes alkyle, acyle, aryle, aralkyle ou alcyne éventuellement substitués auxquels il est fait référence dans la présente description présentent généralement 1 à 20 atomes de carbone, de préférence 1 à 12, et plus préférentiellement 1 à 9 atomes de carbone. Ils peuvent être linéaires ou ramifiés. Ils peuvent être également substitués par des atomes d'oxygène, sous forme notamment d'esters, des atomes de soufre ou d'azote.

Parmi les radicaux alkyle, on peut notamment citer le radical méthyle, éthyle, propyle, butyle, pentyle, isopropyle, tert-butyle, pentyle, hexyle, octyle, decyle ou dodécyle.

Les groupes alcynes au sens de la présente description sont des radicaux généralement de 2 à 10 atomes de carbone, ils présentent au moins une insaturation acétylénique, tel que le radical acétylenyle.

Les groupes acyle au sens de la présente description sont des radicaux présentant généralement de 1 à 20 atomes de carbone avec un groupement carbonyle.

Parmi les radicaux aryle utilisable selon l'invention, on peut notamment citer le radical phényle, éventuellement substitué notamment par une fonction nitro ou hydroxyle.

Parmi les radicaux aralkyle, on peut notamment citer le radical benzyle ou phénéthyle, éventuellement substitué notamment par une fonction nitro ou hydroxyle.

Lorsque R₁ ou Z est une chaîne polymère, cette chaîne polymère peut être issue d'une polymérisation radicalaire ou ionique ou issue d'une polycondensation.

Dans le cadre de la présente invention, il est notamment intéressant d'employer à titre d'agents de contrôle des xanthates, des dithiocarbamates, ou des dithiocarbazates.

Avantageusement, on utilise, comme agent de contrôle dans l'étape (E⁰), des composés xanthates, comme par exemple le O-ethyl-S-(1-methoxycarbonyl ethyl) xanthate de formule (CH₃CH(CO₂CH₃))S(C=S)OCH₂CH₃ et, plus généralemement, le stabilisant réactif de l'étape (E4) est de préférence porteur de tels groupes.

Un agent de contrôle bien adapté à la mise en oeuvre de l'étape (E⁰) est le composé commercialisé par la société Rhodia sous le nom de Rhodixan A1.

La chaîne polymère (CP) qui est présente sur le stabilisant réactif peut également varier en une assez large mesure et elle peut être adaptée, au cas par cas, en fonction du milieu (M) employé et du type de composition où on souhaite introduire le polymère de la dispersion.

Typiquement, la chaîne polymère (CP) présente sur le stabilisant réactif peut par exemple être choisie parmi les homo et copolymères (statistiques, à gradient ou à bloc) issus de l'homopolymérisation ou de la copolymérisation de monomères dont au moins une partie est choisie parmi :
- les acides mono- et di- carboxyliques insaturés éthyléniques comme l'acide acrylique, l'acide méthacrylique, l'acide itaconique, l'acide maléique, l'acide fumarique,
- les amides des acides carboxyliques insaturés comme l'acrylamide, le méthacrylamide, le N-méthylolacrylamide ou méthacrylamide, les N-alkylacrylamides.
- les amides de la vinylamine, notamment le vinylformamide, le vinylacétamide, la N-vinylpyrrolidone et la N-vinylcaprolactame.
ou plus généralement parmi :
- les acides mono- et di- carboxyliques insaturés éthyléniques comme l'acide acrylique, l'acide méthacrylique, l'acide itaconique, l'acide maléique, l'acide fumarique,
- les amides des acides carboxyliques insaturés comme l'acrylamide, le méthacrylamide, le N-méthylolacrylamide ou méthacrylamide, les N-alkylacrylamides. le N,N-diméthylaminométhyl -acrylamide ou -méthacrylamide, le 2(N,N-diméthylamino)éthyl-acrylamide ou -méthacrylamide, le 3(N,N-diméthylamino)propyl-acrylamide ou -méthacrylamide, le 4(N,N-diméthylamino)butyl-acrylamide ou -méthacrylamide
- les amides de la vinylamine, notamment le vinylformamide, le vinylacétamide, la N-vinylpyrrolidone et la N-vinylcaprolactame.
- les aminoesters α-β monoéthyléniquement insaturés comme le 2(diméthyl amino)éthyl acrylate (ADAM), 2(diméthyl amino)éthyl méthacrylate (DMAM ou MADAM), le 3(diméthyl amino)propyl méthacrylate, le 2(tertiobutylamino)éthyl méthacrylate, le 2(dipentylamino)éthyl méthacrylate, le 2(diéthylamino)éthyl méthacrylate
- les vinylpyridines
- la vinyl amine
- les vinylimidazolines
- les monomères précurseurs de fonctions amines tels que le N-vinyl formamide oule N-vinyl acétamide, qui engendrent des fonctions amines primaires par simple hydrolyse acide ou basique
- les monomères ammoniumacryloyles ou acryloyloxy
- les sels de triméthylammoniumpropylméthacrylate, en particulier le chlorure
- le chlorure ou le bromure de triméthylammoniuméthylacrylamide ou méthacrylamide,
- le méthylsulfate de triméthylammoniumbutylacrylamide ou méthacrylamide,
- le méthylsulfate de triméthylammoniumpropylméthacrylamide (MAPTA MeS),
- le chlorure de (3-méthacrylamidopropyl)triméthylammonium (MAPTAC),
- le chlorure ou méthylsulfate de (3-acrylamidopropyl)triméthylammonium (APTAC ou APTA MeS),
- le chlorure ou le méthylsulfate de méthacryloyloxyéthyl triméthylammonium,
- les sels d'acryloyloxyéthyl triméthylammonium (ADAMQUAT) comme le chlorure d'acryloyloxyéthyl triméthylammonium ; ou le méthylsulfate d'acryloyloxyéthyl triméthylammonium (ADAMQUAT CI ou ADAMQUAT MeS),
- le méthyle sulfate de méthyldiethylammonium éthyle acrylate (ADAEQUAT MeS),
- le chlorure ou méthyle sulfate de benzyldimethylammonium éthyle acrylate (ADAMQUAT BZ 80),
- le bromure, chlorure ou méthylsulfate de 1-éthyl 2-vinylpyridinium, de 1-éthyl 4-vinylpyridinium ;
- les monomères N,N-dialkyldiallylamines comme le chlorure de N,N-diméthyldiallylammonium (DADMAC) ;
- le chlorure de diméthylaminopropylméthacrylamide,N-(3-chloro-2-hydroxypropyl) triméthylammonium (DIQUAT chlorure),
- le methylsulfate de diméthylaminopropylméthacrylamide,N-(3-methylsulfate-2-hydroxypropyl) triméthylammonium (DIQUAT methylsulfate)
- le monomère de formule 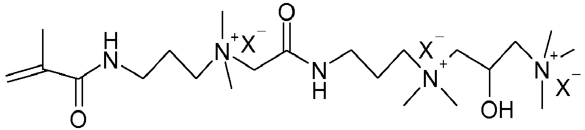 où X- est un anion, de préférence chlorure ou méthylsulfate
- les monomères portant au moins une fonction vinyl phosphonate, comme l'acide vinyl phosphonique, le diméthyl ester de l'acide vinyl phosphonique, le bis(2-chloroethyl) ester de l'acide vinyl phosphonique, l'acide vinylidène diphosphonique, le tetraisopropylester de l'acide vinylidène diphosphonique, ou l'acide alpha-styrène phosphonique, ou leurs mélanges.

Alternativement, les monomères peuvent comprendre des monomères choisis parmi:
- les acides carboxyliques éthyléniquement insaturés, les acides sulfoniques et les acides phosphoniques, et/ou ses dérivés tels que l'acide acrylique (AA), l'acide méthacrylique, l'acide éthacrylique, l'acide a-chloro-acrylique, l'acide crotonique, l'acide maléique, l'anhydride maléique, l'acide itaconique, l'acide citraconique, l'acide mésaconique, l'acide glutaconique, l'acide aconitique, l'acide fumarique, les monoesters d'acides dicarboxyliques monoéthyléniquement insaturés comportant 1 à 3, de préférence 1 à 2, atomes de carbone, par exemple, le maléate de monométhyle, l'acide vinylsulfonique, l'acide (meth)allylsulfonique, l'acrylate de sulfoéthyle, le méthacrylate de sulfoéthyle, l'acrylate de sulfopropyle, le méthacrylate de sulfopropyle, l'acide 2-hydroxy-3-acryloyloxypropylsulfonique, l'acide 2-hydroxy-3-methacryloyloxypropylsulfonique, les acides styrenesulfoniques, l'acide 2-acrylamido-2-methylpropanesulfonique, l'acide vinylphosphonique, l'acide α-methyl vinylphosphonique et l'acide allylphosphonique ;
- les esters d'acides mono- et di-carboxyliques α,β-éthyléniquement insaturés avec C2-C3-alcanediols, par exemple, l'acrylate de 2-hydroxyethyle, le méthacrylate de 2-hydroxyethyle, l'éthacrylate de 2-hydroxyethyle, l'acrylate de 2-hydroxypropyle, le méthacrylate de 2-hydroxypropyle, l'acrylate de 3-hydroxypropyle, le méthacrylate de 3-hydroxypropyle et les (meth)acrylates de polyalkylène glycol;
- les amides d'acides mono-carboxyliques α,β-éthyléniquement insaturés et leurs dérivés N-alkyle et N,N-dialkyle tels que l'acrylamide, le méthacrylamide, le N-méthyl(meth)acrylamide, le N-ethyl(meth)acrylamide, le N-propyl(meth)acrylamide, le N,N-dimethyl(meth)acrylamide, le N,N-diethyl(meth)acrylamide, le morpholinyl(meth)acrylamide, et le metholyl acrylamide (l'acrylamide et le N,N-dimethyl(meth)acrylamide s'avèrent notamment intéressant) ;
- le N-vinyllactames et ses dérivés, par exemple, le N-vinylpryolidone, le N-vinylpiperidone ;
- les composés N-vinylamide à chaînes ouvertes, par exemple, le N-vinylformamide, le N-vinyl-N-methylformamide, le N-vinylacetamide, le N-vinyl-N-methylacetamide, le N-vinyl-N-ethylacetamide, le N-vinylpropionamide, le N-vinyl-N-methylpropionamide et le N-vinylbutyramide ;
- les esters d'acides mono- et di-carboxyliques α,β-éthyléniquement insaturés avec les aminoalcools, par exemple, le (meth)acrylate de N,N-diméthylaminométhyle, le (meth)acrylate de N,N-dimethylaminoethyle, l'acrylate de N,N-diéthylaminoéthyle, et le (meth)acrylate de N,N-dimethylaminopropyle;
- les amides d'acides mono- et di-carboxyliques α,β-éthyléniquement insaturés avec les diamines comprenant au moins un groupe d'amino primaire ou secondaire, tels que le N-[2-(dimethylamino)ethyl]acrylamide, le N[2-(dimethylamino)ethyl]methacrylamide, le N-[3-(dimethylamino)propyl]acrylamide, le N-[3-(dimethylamino)propyl]methacrylamide, le N-[4-(dimethylamino)butyl]acrylamide et le N-[4-(dimethylamino)butyl]methacrylamide ;
- les N-diallylamines, les N,N-diallyl-N-alkylamines, leurs sels d'additions d'acide et leurs produits de quaternisation, l'alkyle employé ici étant préférentiellement C1-C3-alkyle ;
- les composés du N,N-diallyl-N-methylamine et du N,N-diallyl-N,N-dimethylammonium, par exemple, les chlorures et les bromures ;
- les hétérocylces azotés substitutés de vinyle et d'allyle, par exemple, le N-vinylimidazole, le N-vinyl-2-methylimidazole, les composés hétéroaromatiques substitués de vinyle et d'allyle, par exemple, le 2- et 4-vinylpyridine, le 2- et 4-allylpyridine, et leurs sels ;
- les sulphobétaines ; et
- les mélanges et association de deux ou plusieurs des monomères précités.

La chaîne polymère (CP) présente sur le stabilisant réactif peut éventuellement comprendre certaines unités à caractère hydrophobe, sous reserve que la chaîne (CP) reste globalement soluble dans le milieu (M)

Quelle que soit sa nature, le stabilisant réactif employé dans l'étape (E4) peut typiquement être employé à une concentration massique allant de 0,05 % à 10 % , par exemple entre 0,1% et 5% dans le milieu (M). Plus le ratio stabilisant réactif /monomère est faible et plus la taille des chaînes polymère synthétisées dans l'étape (E) sera importante. Pour des faibles teneurs en stabilisant réactif, par exemple en dessous de 1%, il peut se révéler intéressant de mettre en oeuvre des stabilisants additionnels non réactifs du type décrit plus haut dans la présente description.

### Les monomères hydrosolubles

Les monomères hydrosolubles employés dans l'étape (E) peuvent être choisis parmi tous les monomères solubles en soi dans le milieu aqueux (M), mais formant des polymères qui sont insolubles dans ce milieu.

Les polymères formés dans l'étape (E), sont insolubles dans le milieu (M), en ce sens qu'ils sont à l'état dispersé dans le milieu (M) en fin de la réaction, Comme indiqué plus haut dans la présente description, ces polymères sont néanmoins intrinsèquement hydrosolubles.

Par polymère insoluble dans le milieu (M) », on entend au sens de l'invention un polymère qui est propre à former des particules au cours de sa formation dans l'étape (E). De préférence, il ne s'agit pas d'un polymère qui présente cette propriété uniquement dans une gamme de température donnée. A ce sujet, les monomères mis en oeuvre dans l'étape (E) sont de préférence distincts de monomères NIPAM.

Les monomères hydrosolubles employés dans l'étape (E) peuvent par exemple être des monomères solubles dans le milieu (M) et choisis parmi :
- les acides mono- et di- carboxyliques insaturés éthyléniques comme l'acide acrylique, l'acide méthacrylique, l'acide itaconique, l'acide maléique, l'acide fumarique,
- les amides des acides carboxyliques insaturés comme l'acrylamide, le méthacrylamide, le N-méthylolacrylamide ou méthacrylamide, les N-alkylacrylamides. le N,N-diméthylaminométhyl -acrylamide ou -méthacrylamide, le 2(N,N-diméthylamino)éthyl-acrylamide ou -méthacrylamide, le 3(N,N-diméthylamino)propyl-acrylamide ou -méthacrylamide, le 4(N,N-diméthylamino)butyl-acrylamide ou -méthacrylamide
- les amides de la vinylamine, notamment le vinylformamide, le vinylacétamide, la N-vinylpyrrolidone et la N-vinylcaprolactame.
- les aminoesters α-β monoéthyléniquement insaturés comme le 2(diméthyl amino)éthyl acrylate (ADAM), 2(diméthyl amino)éthyl méthacrylate (DMAM ou MADAM), le 3(diméthyl amino)propyl méthacrylate, le 2(tertiobutylamino)éthyl méthacrylate, le 2(dipentylamino)éthyl méthacrylate, le 2(diéthylamino)éthyl méthacrylate
- les vinylpyridines
- la vinyl amine
- les vinylimidazolines
- les monomères précurseurs de fonctions amines tels que le N-vinyl formamide oule N-vinyl acétamide, qui engendrent des fonctions amines primaires par simple hydrolyse acide ou basique
- les monomères ammoniumacryloyles ou acryloyloxy
- les sels de triméthylammoniumpropylméthacrylate, en particulier le chlorure
- le chlorure ou le bromure de triméthylammoniuméthylacrylamide ou méthacrylamide,
- le méthylsulfate de triméthylammoniumbutylacrylamide ou méthacrylamide,
- le méthylsulfate de triméthylammoniumpropylméthacrylamide (MAPTA MeS),
- le chlorure de (3-méthacrylamidopropyl)triméthylammonium (MAPTAC),
- le chlorure ou méthylsulfate de (3-acrylamidopropyl)triméthylammonium (APTAC ou APTA MeS),
- le chlorure ou le méthylsulfate de méthacryloyloxyéthyl triméthylammonium,
- les sels d'acryloyloxyéthyl triméthylammonium (ADAMQUAT) comme le chlorure d'acryloyloxyéthyl triméthylammonium ; ou le méthylsulfate d'acryloyloxyéthyl triméthylammonium (ADAMQUAT Cl ou ADAMQUAT MeS),
- le méthyle sulfate de méthyldiethylammonium éthyle acrylate (ADAEQUAT MeS),
- le chlorure ou méthyle sulfate de benzyldimethylammonium éthyle acrylate (ADAMQUAT BZ 80),
- le bromure, chlorure ou méthylsulfate de 1-éthyl 2-vinylpyridinium, de 1-éthyl 4-vinylpyridinium ;
- les monomères N,N-dialkyldiallylamines comme le chlorure de N,N-diméthyldiallylammonium (DADMAC) ;
- le chlorure de diméthylaminopropylméthacrylamide,N-(3-chloro-2-hydroxypropyl) triméthylammonium (DIQUAT chlorure),
- le methylsulfate de diméthylaminopropylméthacrylamide,N-(3-methylsulfate-2-hydroxypropyl) triméthylammonium (DIQUAT methylsulfate)
- le monomère de formule 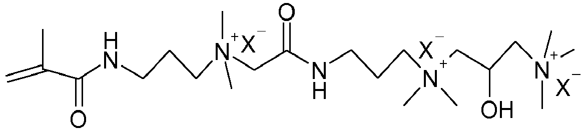 où X- est un anion, de préférence chlorure ou méthylsulfate
- les monomères portant au moins une fonction vinyl phosphonate, comme l'acide vinyl phosphonique, le diméthyl ester de l'acide vinyl phosphonique, le bis(2-chloroethyl) ester de l'acide vinyl phosphonique, l'acide vinylidène diphosphonique, le tetraisopropylester de l'acide vinylidène diphosphonique, ou l'acide alpha-styrène phosphonique, ou leurs mélanges. les mélanges de deux ou plus de ces monomères

Alternativement, les monomères peuvent comprendre des monomères choisis parmi:
- les acides carboxyliques éthyléniquement insaturés, les acides sulfoniques et les acides phosphoniques, et/ou ses dérivés tels que l'acide acrylique (AA), l'acide méthacrylique, l'acide éthacrylique, l'acide α-chloro-acrylique, l'acide crotonique, l'acide maléique, l'anhydride maléique, l'acide itaconique, l'acide citraconique, l'acide mésaconique, l'acide glutaconique, l'acide aconitique, l'acide fumarique, les monoesters d'acides dicarboxyliques monoéthyléniquement insaturés comportant 1 à 3, de préférence 1 à 2, atomes de carbone, par exemple, le maléate de monométhyle, l'acide vinylsulfonique, l'acide (meth)allylsulfonique, l'acrylate de sulfoéthyle, le méthacrylate de sulfoéthyle, l'acrylate de sulfopropyle, le méthacrylate de sulfopropyle, l'acide 2-hydroxy-3-acryloyloxypropylsulfonique, l'acide 2-hydroxy-3-methacryloyloxypropylsulfonique, les acides styrenesulfoniques, l'acide 2-acrylamido-2-methylpropanesulfonique, l'acide vinylphosphonique, l'acide α-methyl vinylphosphonique et l'acide allylphosphonique ;
- les esters d'acides mono- et di-carboxyliques α,β-éthyléniquement insaturés avec C2-C3-alcanediols, par exemple, l'acrylate de 2-hydroxyethyle, le méthacrylate de 2-hydroxyethyle, l'éthacrylate de 2-hydroxyethyle, l'acrylate de 2-hydroxypropyle, le méthacrylate de 2-hydroxypropyle, l'acrylate de 3-hydroxypropyle, le méthacrylate de 3-hydroxypropyle et les (meth)acrylates de polyalkylène glycol;
- les amides d'acides mono-carboxyliques α,β-éthyléniquement insaturés et leurs dérivés N-alkyle et N,N-dialkyle tels que l'acrylamide, le méthacrylamide, le N-méthyl(meth)acrylamide, le N-ethyl(meth)acrylamide, le N-propyl(meth)acrylamide, le N,N-dimethyl(meth)acrylamide, le N,N-diethyl(meth)acrylamide, le morpholinyl(meth)acrylamide, et le metholyl acrylamide (l'acrylamide et le N,N-dimethyl(meth)acrylamide s'avèrent notamment intéressant) ;
- le N-vinyllactames et ses dérivés, par exemple, le N-vinylpryolidone, le N-vinylpiperidone ;
- les composés N-vinylamide à chaînes ouvertes, par exemple, le N-vinylformamide, le N-vinyl-N-methylformamide, le N-vinylacetamide, le N-vinyl-N-methylacetamide, le N-vinyl-N-ethylacetamide, le N-vinylpropionamide, le N-vinyl-N-methylpropionamide et le N-vinylbutyramide ;
- les esters d'acides mono- et di-carboxyliques α,β-éthyléniquement insaturés avec les aminoalcools, par exemple, le (meth)acrylate de N,N-diméthylaminométhyle, le (meth)acrylate de N,N-dimethylaminoethyle, l'acrylate de N,N-diéthylaminoéthyle, et le (meth)acrylate de N,N-dimethylaminopropyle;
- les amides d'acides mono- et di-carboxyliques α,β-éthyléniquement insaturés avec les diamines comprenant au moins un groupe d'amino primaire ou secondaire, tels que le N-[2-(dimethylamino)ethyl]acrylamide, le N[2-(dimethylamino)ethyl]methacrylamide, le N-[3-(dimethylamino)propyl]acrylamide, le N-[3-(dimethylamino)propyl]methacrylamide, le N-[4-(dimethylamino)butyl]acrylamide et le N-[4-(dimethylamino)butyl]methacrylamide ;
- les N-diallylamines, les N,N-diallyl-N-alkylamines, leurs sels d'additions d'acide et leurs produits de quaternisation, l'alkyle employé ici étant préférentiellement C1-C3-alkyle ;
- les composés du N,N-diallyl-N-methylamine et du N,N-diallyl-N,N-dimethylammonium, par exemple, les chlorures et les bromures ;
- les hétérocylces azotés substitutés de vinyle et d'allyle, par exemple, le N-vinylimidazole, le N-vinyl-2-methylimidazole, les composés hétéroaromatiques substitués de vinyle et d'allyle, par exemple, le 2- et 4-vinylpyridine, le 2- et 4-allylpyridine, et leurs sels ;
- les sulphobétaines ; et
- les mélanges et association de deux ou plusieurs des monomères précités.

Les monomères suivants sont en particulier intéressants :
- les acides mono- et di- carboxyliques insaturés éthyléniques comme l'acide acrylique, l'acide méthacrylique, l'acide itaconique, l'acide maléique, l'acide fumarique,
- les amides des acides carboxyliques insaturés comme l'acrylamide, le méthacrylamide, le N-méthylolacrylamide ou méthacrylamide, les N-alkylacrylamides.
- les amides de la vinylamine, notamment le vinylformamide, le vinylacétamide, la N-vinylpyrrolidone et la N-vinylcaprolactame.

La chaîne polymère synthétisée dans l'étape (E) peut être un homopolymère ou bien un copolymère statistique ou à gradient. Selon un mode de réalisation particulier, il peut s'agir d'une chaîne polymère à bloc : pour ce faire, l'étape (E) peut être réalisée en plusieurs étapes, en effectuant d'abord une première étape de polymérisation avec un premier type de monomère, puis au moins une deuxième de polymérisation en introduisant d'autres polymères dans le milieu, après épuisement des monomères de la première étape..

La chaîne polymère synthétisée dans l'étape (E) peut plus généralement être aussi bien de nature cationique, anionique, zwitterionique, que non ionique.

Selon un mode de réalisation intéressant, des monomères réticulants hydrosolubles peuvent être ajoutés conjointement ou après l'introduction des monomères hydrosolubles. Avantageusement, ils permettent d'utiliser des stabilisants non réactifs dans le procédé de la présente invention.

De préférence, ces monomères présentent deux ou trois insaturations éthyléniques.

Ainsi, on peut notamment citer les dérivés acryliques, méthacryliques, acrylamido, méthacrylamido, ester vinylique, éther vinylique, diénique, styrénique, alpha-méthyl styrénique et allylique. Ces monomères peuvent aussi renfermer des groupements fonctionnels autres que les insaturations éthyléniques, par exemple des fonctions hydroxyle, carboxyle, ester, amide, amino ou amino substitués, mercapto, silane, epoxy ou halogéno.

Les monomères appartenant à ces familles sont le divinylbenzène et les dérivés du divinylbenzène, le méthacrylate de vinyle, l'anhydride d'acide méthacrylique, le méthacrylate d'allyle, le diméthacrylate d'éthylèneglycol, le phénylène diméthacrylate, le 10 diméthacrylate de diéthylène glycol, le diméthacrylate de triéthylène glycol, le diméthacrylate de tétraéthylène glycol, le diméthacrylate de polyéthylène glycol 200, le diméthacrylate de polyéthylène glycol 400, le 1,3-diméthacrylate de butanediol, le 1,4-diméthacrylate de butanediol, le 1,6-diméthacrylate de hexanediol, le 1,12-diméthacrylate de dodécanediol, le 1,3-diméthacrylate de glycérol, le diméthacrylate de diuréthane, le triméthacrylate de triméthylolpropane. Pour la famille des acrylates multifonctionnels, on peut notamment citer l'acrylate de vinyle, le diacrylate de bisphénol A époxy, le diacrylate de dipropylèneglycol, le diacrylate de tripropylèneglycol, le diacrylate de polyéthylène glycol 600, le diacrylate d'éthylène glycol, le diacrylate de diéthylène glycol, le diacrylate de triéthylène glycol, le diacrylate de tetraéthylène glycol, le diacrylate de néopentyl glycol éthoxylé, le diacrylate de butanediol, le diacrylate d'hexanediol, le diacrylate d'uréthane aliphatique, le triacrylate de triméthylolpropane, le triacrylate de triméthylolpropane éthoxylé, le triacrylate de triméthylolpropane propoxylé, le triacrylate de glycérol propoxylé, le triacrylate d'uréthane aliphatique, le tétraacrylate de triméthylolpropane, le pentaacrylate de dipentaérytritol. Concernant les éthers vinyliques, on peut notamment citer le vinyl crotonate, le diéthylène glycoldivinyléther, l'ether divinylique de butanediol-1,4, le triéthylèneglycol divinyl éther. Pour les dérivés allyliques, on peut notamment citer le diallyl phtalate, le diallyldiméthylammonium chloride, le diallyl malléate, le sodium diallyloxyacetate, le diallylphenylphosphine, le diallylpyrocarbonate, le diallyl succinate, le N,N'-diallyltartardiamide, le N,N-diallyl-2,2,2-30 trifluoroacétamide, l'ester allylique du diallyloxy acide acétique, le 1,3-diallylurée, la triallylamine, le triallyl trimesate, le triallyl cyanurate, le triallyl trimellitate, le triallyl-1,3,5-triazine-2,4,6(1H, 3H, 5H)-trione. Pour les dérivés acrylamido, on peut notamment citer le N,N'-méthylènebisacrylamide, le N,N'-méthylènebismethacrylamide, le glyoxal bisacrylamide, le diacrylamido acide acétique. En ce qui concerne les dérivés 35 styréniques, on peut notamment citer le divinylbenzène et le 1,3-düsopropénylbenzène.

Dans le cas des monomères diéniques, on peut notamment citer le butadiène, le chloroprène et l'isoprène.

Comme monomères multiéthyléniquement insaturés, on préfère le N,N'-méthylènebisacrylamide, le divinylbenzène, le diacrylate d'éthylène glycol, ou le triacrylate de triméthylolpropane.
Ces monomères multiéthyléniquement insaturés peuvent être utilisés seuls ou enmélanges.

Typiquement, les monomères hydrosolubles initialement présents sur la chaîne (CP) du stabilisant réactif sont plus solubles dans le milieu (M) que les monomères éthyléniquement insaturés employés dans l'étape (E) étant souvent peu sensibles à la présence de solvants et/ou de sels du milieu (M), le cas échéant.

Plus généralement, il est intéressant que la chaîne (CP) soit plus soluble possible dans le milieu (M). Pour ce faire, les monomères constitutifs de la chaîne (CP) sont de préférence choisis parmi les monomères dont la solubilité est parmi les plus élevées.

Selon un mode de réalisation possible, les stabilisants réactifs et les monomères éthyléniquement insaturés sont introduits conjointement dans le milieu (M), et leur mélange sont typiquement effectué avant ou pendant l'ajout de l'initiateur.

Selon un autre mode de réalisation possible, des monomères éthyléniquement insaturés peuvent être ajoutés progressivement dans le milieu (M) après l'ajout des stabilisants réactifs, typiquement pendant ou après l'ajout de l'initiateur.

### Les sources de radicaux libres

On peut utiliser, dans l'étape (E) du procédé de l'invention comme dans l'étape (E⁰) préalable, toute source de radicaux libres connue en soi comme adaptée aux procédés de polymérisation en milieu aqueux.

L'initiateur de polymérisation radicalaire peut par exemple être choisi parmi les initiateurs initiateurs suivants :
- les peroxydes d'hydrogène tels que : l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,

- les systèmes redox comportant des combinaisons telles que :
- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

Selon un mode de réalisation intéressant, on peut employer un amorceur radicalaire de type redox, qui présente l'avantage de ne pas nécessiter un chauffage du milieu réactionnel (pas d'amorçage thermique).

Ainsi, la source de radicaux libres employée peut typiquement être choisie parmi les amorceurs redox classiquement utilisés en polymérisation radicalaire, typiquement ne nécessitant pas de chauffage pour leur amorçage thermique. Il s'agit typiquement d'un mélange d'au moins un agent oxydant hydrosoluble avec au moins un agent réducteur hydrosoluble.

L'agent oxydant présent dans le système redox peut par exemple être choisi parmi les peroxydes, tels que : le peroxyde d'hydrogène, l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle ; le persulfate de sodium, le persulfate de potassium, le persulfate d'ammonium, ou bien encore le bromate de potassium.

L'agent réducteur présent dans le système redox peut typiquement être choisi parmi le formaldéhyde sulfoxylate de sodium (notamment sous sa forme de dihydrate, connue sous le nom de Rongalit ou sous la forme d'un anhydride), l'acide ascorbique, l'acide érythorbique, les sulfites, bisulfites ou métasulfites (sulfites, bisulfites ou métasulfites de métaux alcalins en particulier), les nitrilotrispropionamides, et les amines et ethanolamines tertiaires (de préférence hydrosolubles).

Des systèmes redox possibles comportent des combinaisons telles que :
- les mélanges de persulfates hydrosolubles avec des amines tertiaires hydrosolubles,
- les mélanges de bromates hydrosolubles (bromate de métaux alcalins par exemple) avec des sulfites hydrosolubles (sulfites de métaux alcalins par exemple),
- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

Un système redox intéressant comprend (et de préférence consiste en) par exemple l'association de persulfate d'ammonium et de formaldéhyde sulfoxylate de sodium.

Optionnellement, le milieu aqueux (M) de l'étape (E) peut comprendre au moins un sel, choisi par exemple parmi les sels organiques ou inorganiques améliorant ou assurant l'insolubilisation du polymère synthétisé, qui tendent généralement à faciliter l'obtention de la dispersion de polymères hydrosolubles recherchée dans le cadre de l'invention.

De sels bien adaptés sont ceux comportant les anions sulfate, dihydrogénophosphate, phosphate et halogénures. Les cations correspondants peuvent être choisis parmi les cations sodium, potassium, calcium, magnésium, aluminium, zinc, ammonium et leur mélange. L'utilisation simultanée de deux ou plus de ces sels est également possible. Par exemple, on peut utiliser un mélange de sulfate de sodium et de sulfate d'ammonium.

Optionnellement, le milieu (M) de l'étape (E) peut comprendre, en outre, au moins un solvant hydrosoluble, par exemple, un polyol, tel que le glycérol.Selon un mode de réalisation, le milieu (M) comprend à la fois des sels et un solvant. Par exemple, le milieu (M) peut comprendre un mélange de sulfate de sodium et de sulfate d'ammonium, et un solvant, de préférence un polyol.

Alternativement, le milieu (M) peut comprendre uniquement des sels, l'exclusion de solvant. Par exemple, le milieu (M) peut comprendre un mélange de sulfate de sodium et de sulfate d'ammonium, sans solvant.

### Les conditions de mise en oeuvre des étapes (E⁰) et (E)

Compte tenu de la mise en oeuvre du système redox dans l'étape (E⁰) et ou l'étape (E), cette étape est avantageusement conduite en milieu aqueux, typiquement en utilisant de l'eau à titre d'unique solvant. Elle permet ainsi d'obtenir un polymère directement en milieu aqueux sans avoir à utiliser de solvants organiques, ce qui rend le procédé particulièrement adapté à une utilisation à l'échelle industrielle.

Par ailleurs, les étapes (E⁰) et (E) sont avantageusement mises en oeuvre à basse température, de préférence en dessous de 40°C, plus avantageusement à une température inférieure ou égale à 30°C, notamment entre 5 et 25°C. Ces deux étapes peuvent donc être réalisées par exemple à température ambiante, ce qui est un autre avantage du procédé de l'invention, en termes de coûts énergétiques.

La possibilité de conduire l'étape (E⁰) à faible température permet par ailleurs d'envisager sa mise en oeuvre pour la polymérisation de la N-vinylcaprolactame (NVCL) en milieu aqueux (dans l'eau ou, avantageusement, dans un mélange d'eau et d'un solvant hydrosoluble), qui nécessite une polymérisation à une température inférieure à son point de trouble (« cloud point » en anglais) qui est de 32°C. Dans ce cadre, le procédé de l'invention peut notamment être mis en oeuvre pour la synthèse de poly(N-vinylcaprolactame) ou de polymères à base à la fois d'unités monomères NVCL et NVP, amphiphiles ou non.

### Applications

Les dispersions obtenues à l'issue de l'étape (E) peuvent être employées dans un très grand nombre d'applications, notamment pour la réalisation d'une composition aqueuse de peinture, de revêtement ou d'adhésif, d'une composition aqueuse pour la préparation de matériaux de construction, ou bien encore pour la réalisation de compositions cosmétiques ou de soin corporel, de formulations phytosanitaires ou destinées au domaine de l'agriculture ou bien encore dans des fluides pour l'extraction et/ou la production pétrolière (incluant le forage, la fracturation et la récupération assistée du pérole), , ou bien encore pour le traitement des eaux (effluents aqueux domestiques, urbains, industriels, résiduaires) la fabrication du papier et/ou du carton, le traitement des minerais et des minéraux comme les charges et pigments (par exemple la récupération d'alumine selon le procédé Bayer), ou le conditionnement des sols.

Notamment dans ces compositions, la dispersion de l'invention est généralement introduite à titre d'additif de modification des propriétés rhéologique de la composition, notamment pour augmenter la viscosité. Plus généralement, elle peut être employée à titre de floculant, de coagulant, de stabilisant, d'épaississant ou d'agent de flottation. La dispersion de l'invention peut également utilisée à titre d'agent de surface, notamment comme additif de modificateur de surface.

Selon un aspect particulier, la présente invention concerne la préparation d'une composition aqueuse (telle qu'un des compositions précitée) comprenant une étape dans laquelle on ajoute une dispersion de polymère issue de l'étape (E) au sein d'une pré-composition aqueuse.

De façon plus générale, les dispersions de l'invention peuvent être employées seules ou en mélanges de plusieurs d'entre elles, dans la plupart des applications envisageables pour les polymères hydrosolubles.

### Exemples

La synthèse se déroule en deux étapes :
1. Synthèse d'un pré-polymère P1 poly(2-Acrylamido-2-methylpropane sulfonate de sodium) vivant
2. Préparation d'une dispersion de copolymères acrylamide/acide acrylique homogène eau dans eau

### Etape 1 : Synthèse d'un pré-polymère P1 poly(2-Acrylamido-2-methylpropane sulfonate de sodium) vivant

Dans un ballon de 1L, on a introduit, à température ambiante (20°C), 320 g de 2-Acrylamido-2-methylpropane sulfonate de sodium (AMPS 2405 50%), 188 g d'eau distillée, 3,3 g de O-ethyl-S-(1-methoxycarbonyl ethyl) xanthate de formule (CH₃CH(CO₂CH₃))S(C=S)OEt 146 g d'éthanol et 1,12 g d'amorceur ACP (acide 4'4-azobis-4-cyanovalérique). Le mélange a été dégazé par bullage d'azote pendant 30 minutes. Le ballon a ensuite été placé dans un bain d'huile thermostaté à 75°C, puis on a laissé la réaction de polymérisation s'effectuer sous agitation pendant 4 heures à 75°C.

On a obtenu une conversion de 100 % (déterminée par RMN ¹H). La masse molaire moyenne en nombre du prépolymère P1, déterminée par RMN ¹H, est de 15537 g/mol. Le solvant a été évaporé sous vide à l'aide d'un rotavap (15 mbar, 50°C) et séché pendant 120 minutes à 50°C. De l'eau a ensuite été rajoutée pour avoir une solution de pré-polymère à 25%. L'extrait sec mesuré après échange de solvant est de 25% (115 °C, 60 min.) - SOLUTION A

### Etape 2. Préparation d'une dispersion de copolymères acrylamide/acide acrylique homogène eau dans eau

### Exemple A Poly(Acrylamide/Acide Acrylique) 70/30 mol%

### Conditions :

Pré-polymère 1/ poly(Acrylamide/Acide Acrylique) = 30% massique.
Concentration en poly(Acrylamide/Acide Acrylique) = 14,9%massique.

Dans un ballon de 250 mL, on a introduit, à température ambiante (20°C), 24 g solution A, 27,88 g d'acrylamide (solution aqueuse à 50% en masse), 6,06 g d'acide acrylique, 3,48 g de sulfate de sodium, 18,60 g de sulfate d'ammonium, 8 g de glycérol, 45,18 g d'eau distillée et 0,35 g de soude (solution aqueuse à 50% en masse). Le mélange a été dégazé par bullage d'azote sous agitation pendant 30 minutes. Après avoir ajouté 0,045 g de VA044 (2,2'-Azobis[2-(2-imidazolin-2-yl)propane]dihydrochloride), le ballon a été placé dans un bain d'huile thermostaté à 38°C toujours sous agitation. Après 4 heures de réaction, ont de nouveau été ajoutés 0,045 g de VA044. On a alors laissé la réaction de polymérisation se dérouler toujours sous agitation et à 38°C pendant 3 heures et 30 minutes supplémentaires.

A l'issue des 8 heures et trente minutes de réaction, on a obtenu une conversion de >99,9% pour l'acide acrylique et pour l'acrylamide (conversions déterminées par HPLC). Une analyse par chromatographie d'exclusion stérique dans une solution aqueuse de NaCl 100mM NaH2PO4 25mM, Na2HPO4 25mM solution tampon pH=7 avec un détecteur MALLS 3 angles fournit les valeurs de masse molaire moyenne en masse (M_{w}) et de l'indice de polydispersité suivantes :
M_{w} = >210000 g/mol
Ip => 1,4

A l'aide d'un microscope polariseur analyseur, la taille des particules a été estimée entre 1 et 3 µm.

Le produit est stable après 8 mois de stockage à température ambiante.

### Exemple B Poly(Acrylamide/Acide Acrylique) 70/30 mol%

### Conditions :

Pré-polymère 1/ poly(Acrylamide/Acide Acrylique) = 30% massique.
Concentration en poly(Acrylamide/Acide Acrylique) = 15,0%massique.

Dans un ballon de 250 mL, on a introduit, à température ambiante (20°C), 24 g solution A, 27,88 g d'acrylamide (solution aqueuse à 50% en masse), 6,06 g d'acide acrylique, 3,48 g de sulfate de sodium, 18,60 g de sulfate d'ammonium, 52,79 g d'eau distillée et 0,35 g de soude (solution aqueuse à 50% en masse). Le mélange a été dégazé par bullage d'azote sous agitation pendant 30 minutes. Après avoir ajouté 0,045 g de VA044 (2,2'-Azobis[2-(2-imidazolin-2-yl)propane]dihydrochloride), le ballon a été placé dans un bain d'huile thermostaté à 38°C toujours sous agitation. Après 4 heures de réaction, ont de nouveau été ajoutés 0,045 g de VA044. On a alors laissé la réaction de polymérisation se dérouler toujours sous agitation et à 38°C pendant 3 heures et 30 minutes supplémentaires.

A l'issue des 8 heures et trente minutes de réaction, on a obtenu une conversion de 99,8 % pour l'acide acrylique et de 100% pour l'acrylamide (conversions déterminées par HPLC). Une analyse par chromatographie d'exclusion stérique dans une solution aqueuse de NaCl 100mM NaH2PO4 25mM, Na2HPO4 25mM solution tampon pH=7 avec un détecteur MALLS 3 angles fournit les valeurs de masse molaire moyenne en masse (M_{w}) et de l'indice de polydispersité suivantes :
M_{w} = >156000 g/mol
Ip => 1,2

A l'aide d'un microscope polariseur analyseur, la taille des particules a été estimée entre 1 et 3 µm.

Le produit est stable après 8 mois de stockage à température ambiante.

### Exemple C Poly(Acrylamide/Acide Acrylique) 70/30 mol%

### Conditions :

Pré-polymère 1/ poly(Acrylamide/Acide Acrylique) = 23% massique.
Concentration en poly(Acrylamide/Acide Acrylique) = 15,4%massique.

Dans un ballon de 250 mL, on a introduit, à température ambiante (20°C), 18,4 g de solution A, 3,37 g de sulfate de sodium, 18 g de sulfate d'ammonium et 0,35 g de soude (solution aqueuse à 50% en masse). Le mélange a été dégazé par bullage d'azote sous agitation pendant 30 minutes. Après avoir ajouté 0,045 g de VA044 (2,2'-Azobis[2-(2-imidazolin-2-yl)propane]dihydrochloride), le ballon a été placé dans un bain d'huile thermostaté à 38°C toujours sous agitation. Conjointement est enclenchée l'introduction d'une solution contenant 27,88 g d'acrylamide (solution aqueuse à 50% en masse) et 6,06 g d'acide acrylique à un débit de 0,113 mL/min. Après 4 heures de réaction, ont de nouveau été ajoutés 0,045 g de VA044. On a alors laissé la réaction de polymérisation se dérouler toujours sous agitation et à 38°C pendant 3 heures et 30 minutes supplémentaires.

A l'issue des 8 heures et trente minutes de réaction, on a obtenu une conversion de 99,7 % pour l'acide acrylique et de 100% pour l'acrylamide (conversions déterminées par HPLC). Une analyse par chromatographie d'exclusion stérique dans une solution aqueuse de NaCl 100mM NaH₂PO₄ 25mM, Na₂HPO₄ 25mM solution tampon pH=7 avec un détecteur MALLS 3 angles fournit les valeurs de masse molaire moyenne en masse (M_{w}) et de l'indice de polydispersité suivantes :
M_{w} = > 380000
Ip => 1,9

Les chromatogrammes des copolymères montrent bien la présence des deux espèces : le copolymère d'acrylamide et d'acide acrylique et pré-polymère P1.

### Exemple D Poly(Acrylamide/Acide Acrylique) 70/30 mol%

### Conditions :

Pré-polymère 1/ poly(Acrylamide/Acide Acrylique) = 40% massique.
Concentration en poly(Acrylamide/Acide Acrylique) = 22,1%massique.

Dans un ballon de 250 mL, on a introduit, à température ambiante (20°C), 48 g de solution A, 2,81 g de sulfate de sodium, 15 g de sulfate d'ammonium, 18,6 g d'eau distillée, et 0,35 g de soude (solution aqueuse à 50% en masse). Le mélange a été dégazé par bullage d'azote sous agitation pendant 30 minutes. Après avoir ajouté 0,068 g de VA044 (2,2'-Azobis[2-(2-imidazolin-2-yl)propane]dihydrochloride), le ballon a été placé dans un bain d'huile thermostaté à 38°C toujours sous agitation. Conjointement est enclenchée l'introduction d'une solution contenant 41,82 g d'acrylamide (solution aqueuse à 50% en masse) et 9,09 g d'acide acrylique à un débit de 0,1697 mL/min. Après 4 heures de réaction, ont de nouveau été ajoutés 0,068 g de VA044. On a alors laissé la réaction de polymérisation se dérouler toujours sous agitation et à 38°C pendant 3 heures et 30 minutes supplémentaires.

A la fin de la reaction, nous obtenons une dispersion homogene malgré un extrait sec en polymere elevé (22,1%)

## Revendications

1. Procédé de préparation d'une dispersion aqueuse de polymères hydrosolubles pouvant être mis en solution dans de l'eau, au moins dans certaines conditions de pH et de salinité, à une concentration de plus de 0,1 g/L, sans apparition d'aggrégats/ particules de dimensions supérieures à 100 nm, telles qu'observables par microscopie, qui comprend une étape (E) de polymérisation radicalaire, dans laquelle on met en contact, au sein d'un milieu aqueux (M) dans lequel le polymère synthétisé n'est pas soluble :
- au moins un monomère éthyléniquement insaturé qui est soluble dans le milieu aqueux (M)
- au moins une source de radicaux libres ; et
- un stabilisant réactif qui comprend :
- une chaîne polymère (CP) soluble dans le milieu (M)
- un groupe (G) assurant un caractère vivant et contrôlé à la polymérisation radicalaire de l'étape (E), tel que, par exemple, un groupe porteur d'un groupe thiocarbonylthio -S(C=S)-

2. Procédé selon la revendication 1, où le groupe (G) est un groupe porteur d'un groupe thiocarbonylthio -S(C=S)-

3. Procédé selon la revendication 1 ou 2, où l'étape (E) est mise en oeuvre avec la présence d'agents stabilisants non réactifs additionnels, par exemple des polymères amphiphiles à bloc

4. Procédé selon la revendication 1 ou 2, où l'étape (E) n'est pas mise en oeuvre en présence d'agents stabilisants non réactifs additionnels, par exemple des polymères amphiphiles à bloc

5. Procédé selon l'une des revendications 1 à 4, où le groupe (G) présent sur le stabilisant réactif répond typiquement à la formule -S(C=S)-Z
où Z représente :
. un atome d'hydrogène,
. un atome de chlore,
. un radical alkyl éventuellement substitué, aryl éventuellement substitué,
. un hétérocycle éventuellement substitué,
. un radical alkylthio éventuellement substitué,
. un radical arylthio éventuellement substitué,
. un radical alkoxy éventuellement substitué,
. un radical aryloxy éventuellement substitué,
. un radical amino éventuellement substitué,
. un radical hydrazine éventuellement substitué,
. un radical alkoxycarbonyl éventuellement substitué,
. un radical aryloxycarbonyl éventuellement substitué,
. un radical carboxy, acyloxy éventuellement substitué,
. un radical aroyloxy éventuellement substitué,
. un radical carbamoyle éventuellement substitué,
. un radical cyano,
. un radical dialkyl- ou diaryl-phosphonato,
. un radical dialkyl-phosphinato ou diaryl-phosphinato,
ou
. une chaîne polymère

6. Procédé selon l'une des revendications 1 à 5, où le groupement (G) est un xanthate ou un dithiocarbamate, de préférence un xanthate.

7. Procédé selon l'une des revendications 1 à 6, où les monomères employés dans l'étape (E) sont des monomères solubles dans le milieu (M) et choisis parmi :
- les acides mono- et di- carboxyliques insaturés éthyléniques comme l'acide acrylique, l'acide méthacrylique, l'acide itaconique, l'acide maléique, l'acide fumarique,
- les amides des acides carboxyliques insaturés comme l'acrylamide, le méthacrylamide, le N-méthylolacrylamide ou méthacrylamide, les N-alkylacrylamides, le N,N-diméthylaminométhyl -acrylamide ou -méthacrylamide, le 2(N,N-diméthylamino)éthyl-acrylamide ou -méthacrylamide, le 3(N,N-diméthylamino)propyl-acrylamide ou -méthacrylamide, le 4(N,N-diméthylamino)butyl-acrylamide ou -méthacrylamide
- les amides de la vinylamine, notamment le vinylformamide, le vinylacétamide, la N-vinylpyrrolidone et la N-vinylcaprolactame.
- les aminoesters α-β monoéthyléniquement insaturés comme le 2(diméthyl amino)éthyl acrylate, 2(diméthyl amino)éthyl méthacrylate, le 3(diméthyl amino)propyl méthacrylate, le 2(tertiobutylamino)éthyl méthacrylate, le 2(dipentylamino)éthyl méthacrylate, le 2(diéthylamino)éthyl méthacrylate
- les vinylpyridines
- la vinyl amine
- les vinylimidazolines
- les monomères précurseurs de fonctions amines tels que le N-vinyl formamide ou le N-vinyl acétamide, qui engendrent des fonctions amines primaires par simple hydrolyse acide ou basique
- les monomères ammoniumacryloyles ou acryloyloxy
- les sels de triméthylammoniumpropylméthacrylate, en particulier le chlorure
- le chlorure ou le bromure de triméthylammoniuméthylacrylamide ou méthacrylamide,
- le méthylsulfate de triméthylammoniumbutylacrylamide ou méthacrylamide,
- le méthylsulfate de triméthylammoniumpropylméthacrylamide,
- le chlorure de (3-méthacrylamidopropyl)triméthylammonium,
- le chlorure ou méthylsulfate de (3-acrylamidopropyl)triméthylammonium
- le chlorure ou le méthylsulfate de méthacryloyloxyéthyl triméthylammonium,
- les sels d'acryloyloxyéthyl triméthylammonium comme le chlorure d'acryloyloxyéthyl triméthylammonium ; ou le méthylsulfate d'acryloyloxyéthyl triméthylammonium
- le méthyle sulfate de méthyldiethylammonium éthyle acrylate,
- le chlorure ou méthyle sulfate de benzyldimethylammonium éthyle acrylate ,
- le bromure, chlorure ou méthylsulfate de 1-éthyl 2-vinylpyridinium, de 1-éthyl 4-vinylpyridinium ;
- les monomères N,N-dialkyldiallylamines comme le chlorure de N,N-diméthyldiallylammonium;
- le chlorure de diméthylaminopropylméthacrylamide,N-(3-chloro-2-hydroxypropyl) triméthylammonium,
- le methylsulfate de diméthylaminopropylméthacrylamide,N-(3-methylsulfate-2-hydroxypropyl) triméthylammonium
- le monomère de formule 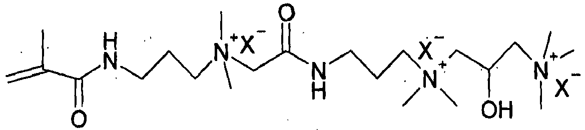 où X- est un anion, de préférence chlorure ou méthylsulfate
- les mélanges de deux ou plus de ces monomères.

8. Procédé selon l'une des revendications 1 à 7, où des monomères réticulants hydrosolubles sont ajoutés conjointement ou après l'introduction des monomères hydrosolubles.

9. Procédé selon l'une des revendications 1 à 8, où le milieu (M) de l'étape (E) comprend, en outre, au moins un sel et/ou un solvant hydrosoluble.

10. Procédé selon la revendication 9, où le milieu (M) de l'étape (E) comprend un mélange de sulfate de sodium et de sulfate d'ammonium, et un solvant, de préférence un polyol.

11. Procédé selon la revendication 9, où le milieu (M) de l'étape comprend un mélange de sulfate de sodium et de sulfate d'ammonium, sans solvant.

12. Dispersion aqueuse de polymères hydrosolubles susceptible d'être obtenue. selon l'une des revendications 1 à 11.

13. Utilisation d'une dispersion selon la revendication 12 pour la réalisation d'une composition aqueuse de peinture, de revêtement ou d'adhésif, d'une composition aqueuse pour la préparation de matériaux de construction, pour la réalisation de compositions cosmétiques ou de soin corporel, de formulations phytosanitaires ou destinées au domaine de l'agriculture dans des fluides pour l'extraction et/ou la production pétrolière (incluant le forage, la fracturation et la récupération assistée du pétrole), pour le traitement des eaux, la fabrication du papier et/ou du carton, le traitement des minerais et/ou des minéraux, ou le conditionnement des sols.

14. Utilisation d'une dispersion selon la revendication 12 à titre d'additif de modification des propriétés rhéologiques d'une composition, ou bien à titre de floculant, de coagulant, de stabilisant, d'épaississant ou d'agent de flottation.

15. Utilisation d'une dispersion selon la revendication 12 à titre d'agent de surface.

## Patentansprüche

1. Verfahren zur Herstellung einer wässrigen Dispersion von wasserlöslichen Polymeren, die zumindest unter bestimmten pH- und Salinitätsbedingungen in einer Konzentration von mehr als 0,1 g/l ohne Auftreten von Aggregaten/Teilchen mit Abmessungen von mehr als 100 nm, so dass sie mikroskopisch beobachtbar sind, in Wasser gelöst werden können,
das einen Schritt (E) der radikalischen Polymerisation umfasst, bei dem man in einem wässrigen Medium (M), in dem das synthetisierte Polymer nicht löslich ist, Folgendes in Kontakt bringt:
- mindestens ein ethylenisch ungesättigtes Monomer, das in dem wässrigen Medium (M) löslich ist;
- mindestens eine Radikalquelle und
- einen reaktiven Stabilisator mit:
- einer Polymerkette (PK), die in dem Medium (M) löslich ist,
- einer Gruppe (G), die den lebenden und kontrollierten Charakter der radikalischen Polymerisation von Schritt (E) gewährleistet, wie beispielsweise einer Gruppe, die eine Thiocarbonylthiogruppe -S(C=S)- trägt.

2. Verfahren nach Anspruch 1, bei dem es sich bei der Gruppe (G) um eine Gruppe, die eine Thiocarbonylthiogruppe -S(C=S)- trägt, handelt.

3. Verfahren nach Anspruch 1 oder 2, bei dem der Schritt (E) in Gegenwart von zusätzlichen unreaktiven Stabilisierungsmitteln, beispielsweise amphiphilen Blockpolymeren, durchgeführt wird.

4. Verfahren nach Anspruch 1 oder 2, bei dem der Schritt (E) nicht in Gegenwart von zusätzlichen unreaktiven Stabilisierungsmitteln, beispielsweise amphiphilen Blockpolymeren, durchgeführt wird.

5. Verfahren nach einem der Ansprüche 1 bis 4, bei dem die an dem reaktiven Stabilisator vorliegende Gruppe (G) typischerweise der Formel -S(C=S)-Z entspricht,
wobei Z für:
. ein Wasserstoffatom,
. ein Chloratom,
. einen gegebenenfalls substituierten Alkyl- oder gegebenenfalls substituierten Arylrest,
. einen gegebenenfalls substituierten Heterocyclus,
. einen gegebenenfalls substituierten Alkylthiorest,
. einen gegebenenfalls substituierten Arylthiorest,
. einen gegebenenfalls substituierten Alkoxyrest,
. einen gegebenenfalls substituierten Aryloxyrest,
. einen gegebenenfalls substituierten Aminorest,
. einen gegebenenfalls substituierten Hydrazinrest,
. einen gegebenenfalls substituierten Alkoxycarbonylrest,
. einen gegebenenfalls substituierten Aryloxycarbonylrest,
. einen gegebenenfalls substituierten Carboxy- oder Acyloxyrest,
. einen gegebenenfalls substituierten Aroyloxyrest,
. einen gegebenenfalls substituierten Carbamoylrest,
. einen Cyanorest,
. einen Dialkyl- oder Diarylphosphonatorest,
. einen Dialkylphosphinato- oder Diarylphosphinatorest
. oder eine Polymerkette
steht.

6. Verfahren nach einem der Ansprüche 1 bis 5, bei dem es sich bei der Gruppe (G) um ein Xanthat oder ein Dithiocarbamat, vorzugsweise ein Xanthat, handelt.

7. Verfahren nach einem der Ansprüche 1 bis 6, bei dem die in Schritt (E) eingesetzten Monomere in dem Medium (M) löslich sind und aus:
- ethylenisch ungesättigten Mono- und Dicarbonsäuren, wie Acrylsäure, Methacrylsäure, Itaconsäure, Maleinsäure oder Fumarsäure,
- ungesättigten Carbonsäureamiden, wie Acrylamid, Methacrylamid, N-Methylolacrylamid oder -methacrylamid, N-Alkylacrylamiden, N,N-Dimethylaminomethylacrylamid oder -methacrylamid, 2-(N,N-Dimethylamino)ethylacrylamid oder -methacrylamid, 3-(N,N-Dimethylamino)propylacrylamid oder -methacrylamid oder 4-(N,N-Dimethylamino)butylacrylamid oder -methacrylamid,
- Vinylaminamiden, insbesondere Vinylformamid, Vinylacetamid, N-Vinylpyrrolidon und N-Vinylcaprolactam,
- α,β-monoethylenisch ungesättigten Aminoestern, wie 2-(Dimethylamino)ethylacrylat, 2-(Dimethylamino)ethylmethacrylat, 3-(Dimethylamino)propylmethacrylat, 2-(tert-Butylamino)ethylmethacrylat, 2-(Dipentylamino)ethylmethacrylat oder 2-(Diethylamino)ethylmethacrylat,
- Vinylpyridinen,
- Vinylamin,
- Vinylimidazolinen,
- Monomeren, bei denen es sich um Vorstufen von Aminfunktionen handelt, wie N-Vinylformamid oder N-Vinylacetamid, die durch einfache saure oder basische Hydrolyse primäre Aminfunktionen bilden,
- Ammoniumacryloyl- oder -acryloyloxy-Monomeren,
- Trimethylammoniumpropylmethacrylatsalzen, insbesondere dem Chlorid,
- Trimethylammoniumethylacrylamid- oder-methacrylamidchlorid oder -bromid,
- Trimethylammoniumbutylacrylamid- oder-methacrylamidmethylsulfat,
- Trimethylammoniumpropylmethacrylamidmethylsulfat,
- (3-Methacrylamidopropyl)trimethylammoniumchlorid,
- (3-Acrylamidopropyl)trimethylammoniumchlorid oder -methylsulfat,
- Methacryloyloxyethyltrimethylammoniumchlorid oder -methylsulfat,
- Acryloyloxyethyltrimethylammoniumsalzen, wie Acryloyloxyethyltrimethylammoniumchlorid oder Acryloyloxyethyltrimethylammoniummethylsulfat,
- Methyldiethylammoniumethylacrylatmethylsulfat,
- Benzyldimethylammoniumethylacrylatchlorid oder
- methylsulfat,
- 1-Ethyl-2-vinylpyridiniumbromid, -chlorid oder
- methylsulfat, 1-Ethyl-4-vinylpyridiniumbromid,
- chlorid oder -methylsulfat,
- N,N-Dialkyldiallylamin-Monomeren, wie N,N-Dimethyldiallylammoniumchlorid,
- Dimethylaminopropylmethacrylamid-N-(3-chlor-2-hydroxypropyl)trimethylammoniumchlorid,
- Dimethylaminopropylmethacrylamid-N-(3-methylsulfat-2-hydroxypropyl)trimethylammoniummethylsulfat,
- dem Monomer der Formel 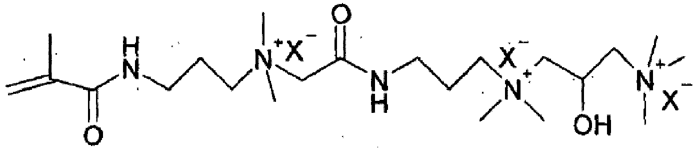 wobei X⁻ für ein Anion, vorzugsweise Chlorid oder Methylsulfat, steht,
- Mischungen von zwei oder mehr dieser Monomere ausgewählt sind.

8. Verfahren nach einem der Ansprüche 1 bis 7, bei dem wasserlösliche Vernetzungsmonomere zusammen mit oder nach dem Eintragen der wasserlöslichen Monomere zugegeben werden.

9. Verfahren nach einem der Ansprüche 1 bis 8, bei dem das Medium (M) von Schritt (E) außerdem mindestens ein Salz und/oder ein Lösungsmittel, das wasserlöslich ist, umfasst.

10. Verfahren nach Anspruch 9, bei dem das Medium (M) von Schritt (E) eine Mischung von Natriumsulfat und Ammoniumsulfat und ein Lösungsmittel, vorzugsweise ein Polyol, umfasst.

11. Verfahren nach Anspruch 9, bei dem das Medium (M) von Schritt (E) eine Mischung von Natriumsulfat und Ammoniumsulfat ohne Lösungsmittel umfasst.

12. Wässrige Dispersion von wasserlöslichen Polymeren, die gemäß einem der Ansprüche 1 bis 11 erhältlich ist.

13. Verwendung einer Dispersion nach Anspruch 12 zur Herstellung einer wässrigen Anstrichmittel-, Beschichtungs- oder Klebstoffzusammensetzung, einer wässrigen Zusammensetzung zur Herstellung von Baustoffen, zur Herstellung von kosmetischen Zusammensetzungen oder Körperpflegezusammensetzungen, Pflanzenschutzformulierungen oder Formulierungen für die Landwirtschaft, in Fluiden für die Erdölförderung und -produktion (einschließlich Bohren, Fracking und tertiärer Erdölgewinnung), zur Wasserbehandlung, Herstellung von Papier und/oder Pappe, Behandlung von Erzen und/oder Mineralien oder Konditionierung von Böden.

14. Verwendung einer Dispersion nach Anspruch 12 als Additiv zur Modifizierung der rheologischen Eigenschaften einer Zusammensetzung oder auch als Flockungsmittel, Koagulationsmittel, Stabilisator, Verdicker oder Flotationsmittel.

15. Verwendung einer Dispersion nach Anspruch 12 als Tensid.

## Claims

1. Process for preparing an aqueous dispersion of water-soluble polymers which can be dissolved in water, at least under certain pH and salinity conditions, at a concentration of more than 0.1 g/l, without the appearance of aggregates/particles having dimensions greater than 100 nm such that they are microscopically observable, which process comprises a step (E) of radical polymerization, wherein the following are brought into contact in an aqueous medium (M) in which the synthesized polymer is not soluble:
- at least one ethylenically unsaturated monomer which is soluble in the aqueous medium (M);
- at least one source of free radicals; and
- reactive stabilizer which comprises:
- a polymer chain (PC) which is soluble in the medium (M),
- a group (G) providing the radical polymerization of step (E) with a living and controlled nature, such as, for example, a group carrying a thiocarbonylthio -S(C=S)- group.

2. Process according to Claim 1, wherein the group (G) is a group carrying a thiocarbonylthio -S(C=S)-group.

3. Process according to Claim 1 or 2, wherein step (E) is carried out with the presence of additional nonreactive stabilizing agents, for example amphiphilic block polymers.

4. Process according to Claim 1 or 2, wherein step (E) is not carried out in the presence of additional nonreactive stabilizing agents, for example amphiphilic block polymers.

5. Process according to one of Claims 1 to 4, wherein the group (G) present on the reactive stabilizer typically corresponds to the formula -S(C=S)-Z
where Z represents:
. a hydrogen atom,
. a chlorine atom,
. an optionally substituted alkyl or optionally substituted aryl radical,
. an optionally substituted heterocycle,
. an optionally substituted alkylthio radical,
. an optionally substituted arylthio radical,
. an optionally substituted alkoxy radical,
. an optionally substituted aryloxy radical,
. an optionally substituted amino radical,
. an optionally substituted hydrazine radical,
. an optionally substituted alkoxycarbonyl radical,
. an optionally substituted aryloxycarbonyl radical,
. an optionally substituted carboxyl, acyloxy radical,
. an optionally substituted aroyloxy radical,
. an optionally substituted carbamoyl radical,
. a cyano radical,
. a dialkyl- or diaryl-phosphonato radical,
. a dialkyl-phosphinato or diaryl-phosphinato radical,
or
. a polymer chain

6. Process according to one of Claims 1 to 5, wherein the group (G) is a xanthate or a dithiocarbamate, preferably a xanthate.

7. Process according to one of Claims 1 to 6, wherein the monomers used in step (E) are monomers which are soluble in the medium (M) and which are selected from:
- ethylenically unsaturated monocarboxylic and dicarboxylic acids, such as acrylic acid, methacrylic acid, itaconic acid, maleic acid or fumaric acid,
- unsaturated carboxylic acid amides, such as acrylamide, methacrylamide, N-methylolacrylamide or -methacrylamide, N-alkylacrylamides, N,N-dimethylaminomethylacrylamide or -methacrylamide, 2-(N,N-dimethylamino)ethylacrylamide or -methacrylamide, 3-(N,N-dimethylamino)propylacrylamide or -methacrylamide, or 4-(N,N-dimethylamino)butylacrylamide or -methacrylamide,
- vinylamine amides, in particular vinylformamide, vinylacetamide, N-vinylpyrrolidone and N-vinylcaprolactam.
- α,β monoethylenically unsaturated amino esters, such as 2-(dimethylamino)ethyl acrylate, 2-(dimethylamino)ethyl methacrylate, 3-(dimethylamino)propyl methacrylate, 2-(tert-butylamino)ethyl methacrylate, 2-(dipentylamino)-ethyl methacrylate, or 2-(diethylamino)ethyl methacrylate,
- vinylpyridines,
- vinylamine,
- vinylimidazolines,
- monomers which are precursors of amine functions, such as N-vinylformamide or N-vinylacetamide, which generate primary amine functions by simple acid or basic hydrolysis,
- ammoniumacryloyl or acryloyloxy monomers,
- trimethylammoniumpropylmethacrylate salts, in particular the chloride,
- trimethylammoniumethylacrylamide or -methacrylamide chloride or bromide,
- trimethylammoniumbutylacrylamide or -methacrylamide methylsulfate,
- trimethylammoniumpropylmethacrylamide methylsulfate,
- (3-methacrylamidopropyl)trimethylammonium chloride,
- (3-acrylamidopropyl)trimethylammonium chloride or methylsulfate,
- methacryloyloxyethyltrimethylammonium chloride or methylsulfate,
- acryloyloxyethyltrimethylammonium salts, such as acryloyloxyethyltrimethylammonium chloride or acryloyloxyethyltrimethylammonium methylsulfate,
- methyldiethylammoniumethyl acrylate methylsulfate,
- benzyldimethylammoniumethyle acrylate chloride or methylsulfate,
- 1-ethyl 2-vinylpyridinium bromide, chloride or methylsulfate, 1-ethyl 4-vinylpyridinium bromide, chloride or methylsulfate,
- N,N-dialkyldiallylamine monomers, such as N,N-dimethyldiallylammonium chloride,
- dimethylaminopropylmethacrylamide,N-(3-chloro-2-hydroxypropyl)trimethylammonium chloride,
- dimethylaminopropylmethacrylamide,N-(3-methylsulfate-2-hydroxypropyl)trimethylammonium methylsulfate,
- the monomer of formula 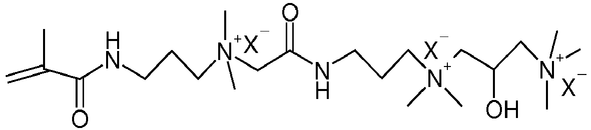 where X⁻ is an anion, preferably chloride or methylsulfate,
- mixtures of two or more of these monomers.

8. Process according to one of Claims 1 to 7, wherein water-soluble crosslinking monomers are added together with or after the introduction of the water-soluble monomers.

9. Process according to one of Claims 1 to 8, wherein the medium (M) of step (E) also comprises at least one salt and/or one solvent which is water-soluble.

10. Process according to Claim 9, wherein the medium (M) of step (E) comprises a mixture of sodium sulfate and ammonium sulfate, and a solvent, preferably a polyol.

11. Process according to Claim 9, wherein the medium (M) of step comprises a mixture of sodium sulfate and ammonium sulfate, without solvent.

12. Aqueous dispersion of water-soluble polymers, which can be obtained according to one of Claims 1 to 11.

13. Use of a dispersion according to Claim 12, for the preparation of an aqueous paint, coating or adhesive composition, of an aqueous composition for the preparation of construction materials, for the preparation of cosmetic or body care compositions, of phytosanitary formulations or formulations intended for the agricultural field, in fluids for oil extraction and/or production (including drilling, fracturing and enhanced oil recovery), for the treatment of water, the manufacturing of paper and/or cardboard, the treatment of ores and/or of minerals, or the conditioning of soils.

14. Use of a dispersion according to Claim 12, as an additive for modifying the rheological properties of a composition, or else as a flocculant, a coagulant, a stabilizer, a thickener or a flotation agent.

15. Use of a dispersion according to Claim 12, as a surface agent.
